# EUROPÄISCHE PATENTANMELDUNG

(11) **EP 0 566 970 A1**
(43) Veröffentlichungstag der Anmeldung: **27.10.1993**
(21) Anmeldenummer: 93106018.0
(22) Anmeldetag: 14.04.1993
(51) Int. Cl.: H01Q 1/32

(54) **Antenne, insbesondere für Kraftfahrzeuge**

(30) Priorität: 16.04.1992 DE 9205486 U
(71) Anmelder: Leonische Drahtwerke AG, D-90402 Nürnberg (DE)
(72) Erfinder: Reichinger, Gerhard, W-8540 Rednitzhembach (DE)
(74) Vertreter: Tergau, Enno, Dipl.-Ing.

(57) **Zusammenfassung**

Antenne, insbesondere für Kraftfahrzeuge, mit wenigstens einem elektrischen Leiter und einem Träger für den Leiter, wobei der Träger ein elektrisch nicht leitendes Dichtungsteil des Fahrzeugs ist.

## Beschreibung

Die Erfindung betrifft eine Antenne mit den im Oberbegriff des Anspruches 1 genannten Merkmalen. Derartige Antennen, die hauptsächlich für die Verwendung in oder an Kraftfahrzeugen bzw. Automobilen geeignet sind, können beispielsweise eingesetzt werden für Telefon-, Funk- oder Telefaxeinrichtungen im Auto, zur Rundum-Sicherung des Fahrzeugs gegen Einbruch und Diebstahl, zur Funkaktivierung beispielsweise einer Fahrzeugheizung oder eines Garagentores aber auch für schlüssellose Zugangssysteme zur Betätigung von Tür- oder Kofferraumverriegelungen.

Je nach Anwendungsfall unterscheidet man zwischen passiven und aktiven Antennen. Passive Antennen sind beispielsweise herkömmliche Radio-Antennen. Dagegen sind Antennen für Telefon oder Funk aktiv.

Bei Antennen, bei denen ein drahfförmiger Leiter eingesetzt wird, ist aufgrund dessen geringer mechanischer Stabilität eine den Leiter stützende Trägerstruktur notwendig. Dies kann beispielsweise eine Windschutzscheibe sein, auf die der elektrische Leiter aufgeklebt ist oder im Falle von Ringantennen ein z.B. aus Kunststoff bestehender Träger sein, der mit dem die Antenne bildenden Leiter umwickelt ist.

Eine derartige Antenne ist beispielsweise aus der deutschen Offenlegungs-Schrift 36 27 193 A1 bekannt. Die hier beschriebene Antenne ist Bestandteil eines schlüssellosen Zugangsystems für Fahrzeuge und ist in deren Außenspiegel eingebaut. Als Träger dient eine rahmenartige Struktur, auf deren Umfang ein elektrischer Leiter zur Bildung einer Ringantenne aufgewickelt ist.

Der Nachteil dieser oder anderer derartiger Antennen besteht darin, daß je nach Einbauort im Fahrzeug speziell angepaßte Trägerstrukturen gefertigt werden müssen. Dies bedeutet einen zusätzlichen Herstellungs- und damit Kostenaufwand. Des weiteren muß der Einbauort der herkömmlichen Antennen schon bei der Konstruktion des Fahrzeugs genau geplant und festgelegt sein. Ein weiterer Nachteil liegt darin, daß zusätzlicher Einbauraum zur Verfügung gestellt werden muß.

Davon ausgehend ist es die Aufgabe der Erfindung, eine Antenne zu schaffen, welche die Nachteile des Standes der Technik nicht aufweist. Diese Aufgabe wird durch das kennzeichnende Merkmal des Anspruches 1 gelöst.

Danach ist der Träger für den Antennenleiter ein am Fahrzeug vorzugsweise serienmäßig vorhandenes Dichtungsteil. Der Begriff Dichtungsteil ist dabei im weitesten Sinne zu verstehen und umfaßt nicht nur Bauteile, die zur Herstellung einer Feuchtigkeits- oder Gasdichtigkeit dienen, sondern auch solche Bauteile, die beispielsweise eine Verhinderung von Vibrationen zum Ziel haben. Es können generell sämtliche Fahrzeugdichtungen und insbesondere Karosseriedichtungen als Trägerfürden AntennenleiterVerwendung finden. Weitere Beispiele sind Dichtungen für die einzelnen Scheiben, für die Automobiltüren, für den Kofferraum oder für die Motorhaube.

Zweckmäßig sind solche Dichtungen, die erfahrungsgemäß in Vielzahl am Automobil vorhanden sind und/oder einem häufigeren Austausch unterliegen. Dann handelt es sich nämlich um in großen Stückzahlen hergestellte Teile, die die erfindungsgemäße Ausstattung mit einer Antenne verbilligen und die Verfügbarkeit von solchen Austausch-Antennen-Dichtungen verbessern. Ein weiterer Vorteil der Erfindung liegt darin, daßdie Nachrüstung mitAntennen bedürftigen Ausstattungsgegenständen dadurch relativ einfach vonstatten geht, daß ganz einfach eine herkömmliche serienmäßige Dichtung gegen eine erfindungsgemäße Antenne ausgetauscht wird. In vielen Fällen kann dann z. B. auf eine Durchbohrung der Karosserie verzichtet werden.

Durch die Maßnahme gemäß Anspruch 2 ist gewährleistet, daß der Leiter praktisch vollständig von dem Dichtungswerkstoff beschädigungssicher, von Feuchtigkeits- und sonstigen schädigenden Einflüssen geschützt umhüllt ist.

In den Ansprüchen 3-7 sind zweckmäßige Ausgestaltungsformen des Leiters bzw. der Antenne angegeben. Die Ansprüche 8-14 kennzeichnen zweckmäßige Ausgestaltungen des Dichtungsteils. Je nach Anwendungsfall kann es sinnvoll sein, das Dichtungsteil als Hohlkörper oder als Vollkörper beispielsweise in Form einer Schlauchdichtung, auszubilden. Im letztgenannten Fall kann der Leiter zweckmäßigerweise sowohl in der Wand des Hohlkörpers als auch in dessen Hohlraum selbst angeordnet sein.

Gemäß Anpruch 15 ist das Dichtungsteil Bestandteil eines Rückspiegels. Dies ist ein besonders vorteilhafter Einsatzort, da insbesondere AuBen-Rückspiegel an exponierter und damit sowohl für die aktive als auch für die passive Funktion geeigneter Stelle der Karosserie positioniert sind. Dieser Einsatzort eignet sich besonders bei Einbruch- und Diebstahl-Sicherungssystemen, weil hier die Antennen als vornehmlich aktive Antennen eine Rundum-Sicherung ermöglichen. Durch die Außen-Rückspiegel lassen sich die Seitenflanken der Karosserie bzw. des Fahrgastraumes wirksam überwachen. Dabei kann die Spiegelscheibe bzw. Reflektorplatte die Wirkung der Antenne durch ihr Reflektionsvermögen noch erhöhen. Es lassen sich dadurch auch die jeweiligen elektromagnetischen Wellen richten oder bündeln.

Bei der Verwendung an Innenspiegeln läßt sich im Falle von Sicherungssystemen in einfacher Weise auch die Front- und die Heckscheibe überwachen. Es kann mit ein- und demselben Antennen-Dichtungsteil sowohl nach hinten als auch nach vorn gesichert werden, wenn nur eine entsprechende Positionierung gegenüber dem Gehäuse des Innen-Rückblickspiegels vorgenommen ist.

Zweckmäßig ist dann eine Anordnung des Dichtungsteils gemäß Anspruch 16, die das Spiegelgehäuse bzw. den Spiegelumfang nach Art eines Faßreifens umgibt, so daß sowohl nach vorne als auch nach hinten weitgehend ungestört Wellen ausgesendet oder empfangen werden können.

Die Erfindung wird an Ausführungsbeispielen im folgenden näher erläutert. Es zeigen:
Fig. 1 eine perspektivische Ansicht eines Ausführungsbeispiels einer erfindungsgemäßen Antenne,
Fig. 2 einen Querschnitt entlang der Linie 11-11 in Fig. 1 in schematisierter perspektivischer Darstellung,
Fig. 3 eine ein Montagebeispiel einer erfindungsgemäßen Antenne zeigende Schnittdarstellung und
Fig. 4 ein weiteres Montagebeispiel einer erfindungsgemäßen Antenne in perspektivischer Explosionsdarstellung.

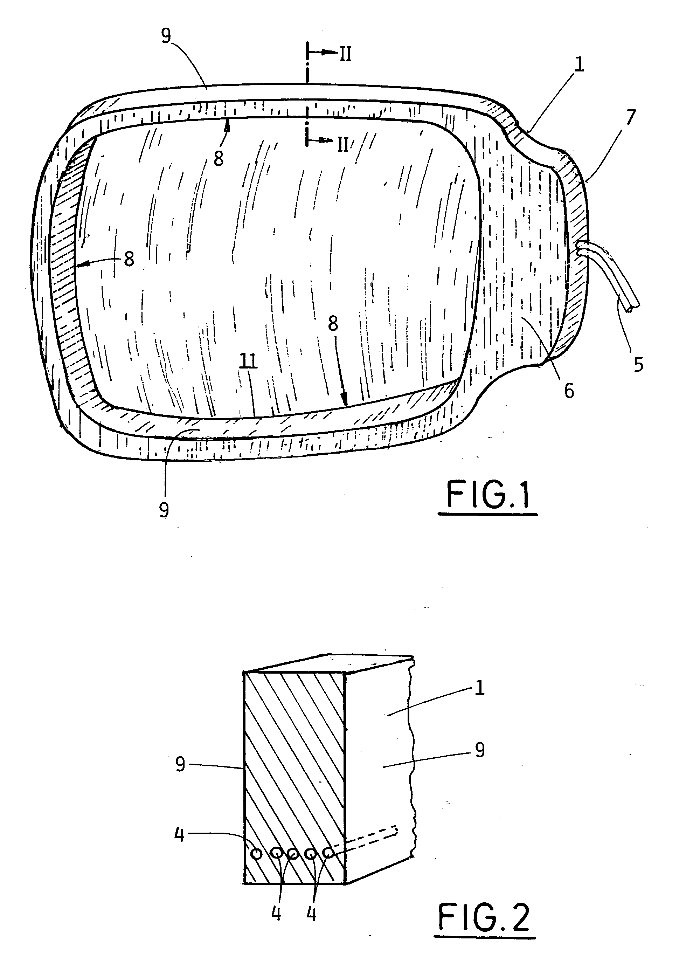

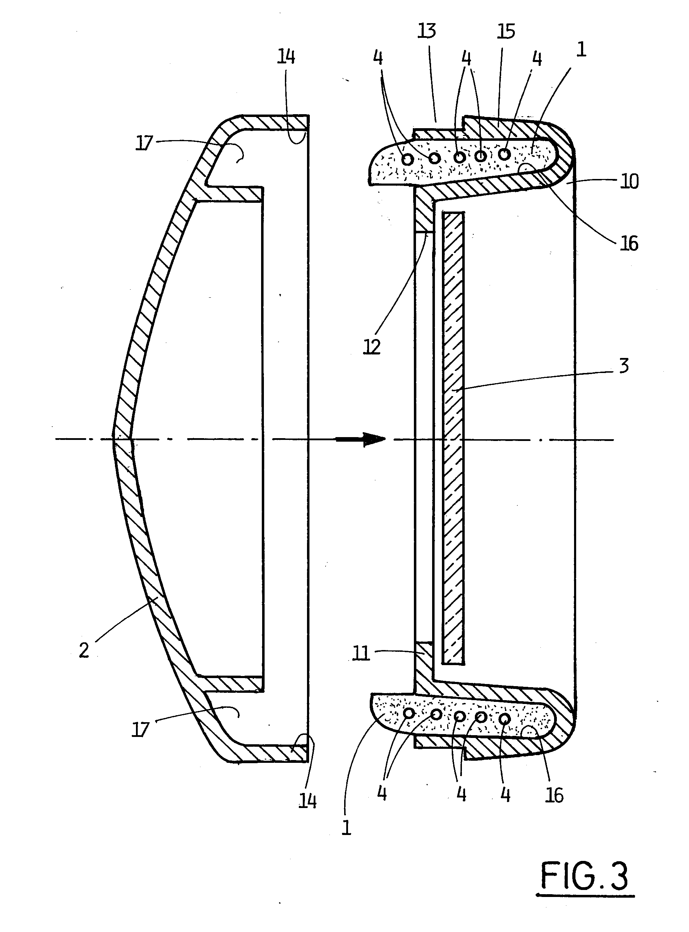

Fig. 1 zeigt eine als Dichtungsteil 1 für einen Fahrzeugaußenspiegel ausgebildete Antenne. Das Dichtungsteil besteht aus einem geeigneten elastischen und feuchtigkeitsabweisenden Kunststoff, beispielsweise aus Polyurethan-Schaum. Das Dichtungsteil 1 hat eine rahmenartige, der Innenumfangsform der Gehäuseschale 2 (Fig. 3) eines Außen-Rückspiegels angepaßte, etwa rechteckige Form. In das Dichtungsteil sind mehrere Leiter-Windungen 4 (Fig.2) inkorporiert. Die Enden dieser Windungen sind über eine Anschlußleitung 5 an der einen Schmalseite 7 des Dichtungsteils 1 nach außen geführt. Die Schmalseite 7 weist eine plattenartige Verstärkung 6 auf, die dem Dichtungsteil 1 eine gewisse Formstabilität im nichtmontierten Zustand verleiht und die Montage in der Gehäuseschale 2 (Fig. 3) eines Außenspiegels erleichtert.

Wie aus Fig. 2 hervorgeht, ist der nicht verstärkte Teil 8 des Dichtungsteils 1 im Querschnitt rechteckförmig derart, daß dessen Längsseiten 9 sich rechtwinklig zur Planebene des Dichtungsteils 1 erstrecken. Die vorzugsweise aus Kupfer bestehenden Leiter-Windungen 4 sind parallel zueinander und parallel zur Planebene des Dichtungsteils angeordnet. Es sind jedoch auch andere Anordnungen denkbar. Beispielsweise kann der Leiter mäanderartig gelegt sein, um damit eine größere Gesamtlänge zu erreichen.

In Fig.3 ist ein Anwendungsbeispiel dargestellt, bei dem ein erfindungsgemäßes Dichtungsteil 1 eine Abdichtung zwischen der Gehäuseschale 2 eines Au- ßenrückspiegels und einer damit verbundenen, einen Spiegel 3 tragenden Blende 10 bewerkstelligt. Die Gehäuseschale ist von einer bei Außenspiegeln üblichen etwa rechteckigen bis ovalen Umfangsform und im Querschnitt etwa C-förmig. Die Blende 10 ist ein topfförmiges Teil, auf dessen Boden 11 der Spiegel 3 in Parallellage zum Boden angeordnet ist. Der Boden 11 weist eine Öffnung 12 auf, die eine Verbindung zum Innenraum der Gehäuseschale 2 herstellt und das Anbringen von Funktionsbauteilen, beispielsweisen solchen zur Beheizung oder Verstellung des Spiegels 3, an dessen Rückseite ermöglicht. Der Umfang der Blende 10 ist in Form einer Stufe 13 in dem an den Boden 11 angrenzenden Bereich verringert. Mit diesem Bereich ist die Blende formschlüssig in den Öffnungsrand 14 der Gehäuseschale 2 einsetzbar und dort gegebenenfalls verklebbar.

Die Wand 15 der Blende 10 weist eine umlaufende, zur Gehäuseschale hin offene Nut 16 auf, die im Endmontagezustand mit einer ebenfalls umlaufenden Nut 17 der Gehäuseschale 2 in Verbindung steht. Beide Nuten 16,17 bilden im Endmontagezustand einen Hohlraum, in dem ein erfindungsgemäßes Dichtungselement 1 einliegt.

Im Dichtungselement 1 eingebettet sind mehrere Leiter-Windungen 4, deren Enden mit einer (nicht dargestellten) Anschlußleitung verbunden sind. Diese kann über eine bei beheizbaren oder motorisch verstellbaren Außenspiegeln vorhandene Zugangsöffnung in der Karosserie ins Wageninnere geführt werden.

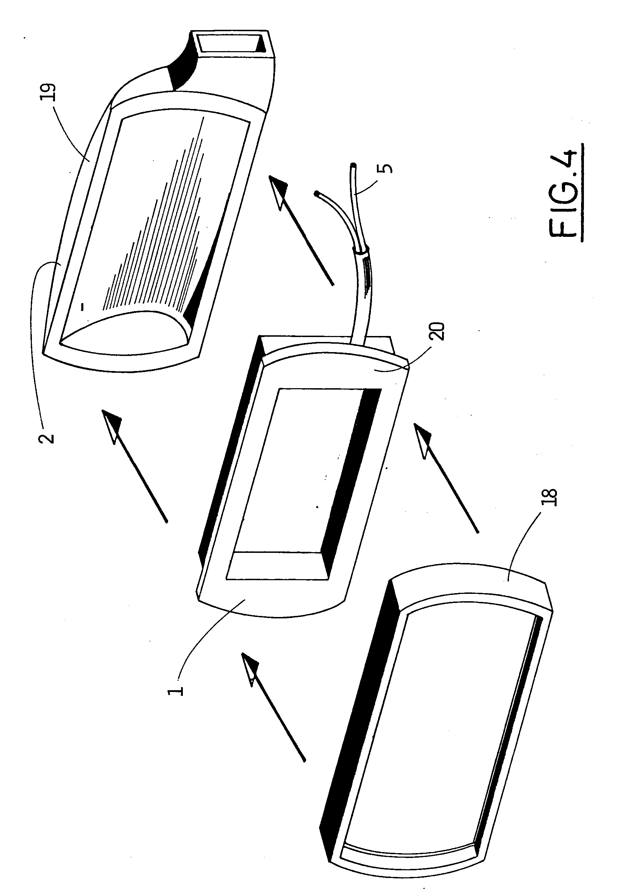

Das in Fig. 4 dargestellte Beispiel eines einfachen, motorisch nicht verstellbaren Außenspiegels ist stellvertretend für beliebige Montagefälle in einem Kraftfahrzeug, bei denen zwischen zwei zu verbindenden Teilen 18,19 ein Feuchtigkeits- oder auch vibrationshemmendes Zwischenteil 20 zwischengelagert ist. Dieses Zwischenteil kann dann im Bedarfsfalle auch nachträglich durch ein erfindungsgemäßes Dichtungsteil 1 mit inkorporierten Leiter-Windungen 4 ersetzt werden.

### Bezugszeichenliste

1. Dichtungsteil
2. Gehäuseschale
3. Spiegel
4. Leiter-Windung
5. Anschluß-Leitung
6. Verstärkung
7. Schmalseite
8. Teil
9. Längsseite
10. Blende
11. Boden
12. Öffnung
13. Stufe
14. Öffnungsrand
15. Wand
16. Nut
17. Nut
18. Teil
19. Teil
20. Zwischenteil

## Patentansprüche

1. Antenne, insbesondere für Kraftfahrzeuge, mit wenigstens einem elektrischen Leiter und einem Träger für den Leiter
dadurch gekennzeichnet,
daß der Träger ein elektrisch nichtleitendes Dichtungsteil des Fahrzeugs ist.

2. Antenne nach Anspruch 1,
dadurch gekennzeichnet,
daß der Leiter von dem Dichtungsteil zumindest auf einem Teil seiner Länge umhüllt ist.

3. Antenne nach Anspruch 2,
dadurch gekennzeichnet,
daß sie sich aus wenigstens einer Ringantenne zusammensetzt.

4. Antenne nach Anspruch 2,
dadurch gekennzeichnet,
daß der elektrische Leiter labyrinthartig angeordnet ist.

5. Antenne nach einem der Ansprüche 1 bis 4,
dadurch gekennzeichnet,
daß sie eine aktive Antenne ist.

6. Antenne nach einem der Ansprüche 1 bis 4,
dadurch gekennzeichnet,
daß sie eine passive Antenne ist.

7. Antenne nach einem der Ansprüche 1 bis 6,
dadurch gekennzeichnet,
daß der elektrische Leiter aus Kupfer oder einem anderen leitenden Material besteht.

8. Antenne nach einem der Ansprüche 1 bis 7,
dadurch gekennzeichnet,
daß das Dichtungsteil aus einem elastischen Material besteht.

9. Antenne nach Anspruch 8,
dadurch gekennzeichnet,
daß das Material des Dichtungsteils Kunststoff ist.

10. Antenne nach Anspruch 9,
dadurch gekennzeichnet,
daß das Dichtungsteil aus PU-Schaum besteht.

11. Antenne nach einem der Ansprüche 1 bis 10,
dadurch gekennzeichnet,
daß das Dichtungsteil ein Vollkörper ist.

12. Antenne nach einem der Ansprüche 1 bis 10,
dadurch gekennzeichnet,
daß das Dichtungsteil ein Hohlkörper ist, in dem der elektrische Leiter frei beweglich einliegt.

13. Antenne nach einem der Ansprüche 1 bis 10, dadurch gekennzeichnet,
daß der elektrische Leiter in der Wand des Hohlkörpers inkorporiert ist.

14. Antenne nach einem der Ansprüche 1 bis 10, dadurch gekennzeichnet,
daß das Dichtungsteil ein Faltenbalg ist.

15. Antenne nach einem der Ansprüche 1 bis 14, dadurch gekennzeichnet,
daß das Dichtungsteil Bestandteil eines Rückspiegels ist.

16. Antenne nach Anspruch 15,
dadurch gekennzeichnet,
daß das Dichtungsteil den Umfang des Spiegels bzw. des Spiegelgehäuses umgibt.
